# EUROPEAN PATENT APPLICATION

(11) **EP 4 427 833 A1**
(43) Date of publication of application: **11.09.2024**
(21) Application number: 23160716.9
(22) Date of filing: 08.03.2023
(51) Int. Cl.: B01D 53/04, B01D 53/047

(54) **DIRECT AIR CAPTURE DEVICE**

(71) Applicant: Climeworks AG, 8050 Zürich (CH)
(72) Inventor: JANETT, Andri, Zürich (CH); FUCHS, Siegfried, Zürich (CH); RUDOW, Florian, Zürich (CH)
(74) Representative: Bremi, Tobias Hans

(57) **Abstract**

Separation unit (17) for separating at least one gaseous component from a gas mixture containing that component, wherein the separation unit (17) comprises a pair of opposing sliding doors (22) for sealing the upstream opening (35) and the downstream opening (36), respectively, of at least one cavity (24) in a closed state, wherein each of the pair of opposing sliding doors (22), to open the closed cavity (24), is shifted in a direction essentially parallel to the plane of the respective sliding door (22) to uncover the upstream (35) and downstream (36) opening, respectively, wherein each of the pair of opposing sliding doors (22) comprises a pair of curved wall elements (47, 48), an outer wall (47), and an inner wall (48), wherein the axes of curvature of said curved wall elements (47, 48) of one or both sliding doors (22) are aligned parallel and in the same plane, or are coaxial.

## Description

### TECHNICAL FIELD

The present invention relates to a new device for gas separation in particular for direct air capture, such as CO2 capture from air, providing in particular at least one of large flow through cross sections, low pressure drops, low thermal mass, little/few structural parts and high efficiency. Also provided is a method for the operation of such devices as well as parts of such devices.

### PRIOR ART

Gas separation by adsorption has many different applications in industry, for example removing a specific component from a gas stream, where the desired product can either be the component removed from the stream, the remaining depleted stream, or both. Thereby both trace components as well as major components of the gas stream can be targeted by the adsorption process. One important application is capturing carbon dioxide (CO2) from gas streams, e.g., from flue gases, exhaust gases, industrial waste gases, or atmospheric air. Capturing CO2 directly from the atmosphere, referred to as direct air capture (DAC), is one of several means of mitigating anthropogenic greenhouse gas emissions and has attractive economic perspectives as a non-fossil, location-independent CO2 source for the commodity market and for the production of synthetic fuels.

One particular approach for DAC is based on a cyclic adsorption/desorption process on solid, chemically functionalized sorbent materials. For example, in WO-A-2016005226 and WO-A-2017009241 processes based on cyclic adsorption/desorption assisted with steam and a suitable amine functionalized sorbent material respectively are disclosed for the extraction of carbon dioxide from ambient atmospheric air. Further WO 2019/092128 describes another class of sorbent materials based on potassium carbonate functionalization also suitable for cyclic CO2 adsorption/desorption processes.

The adsorption process normally takes place at ambient atmospheric conditions at which air is streamed through the sorbent material and a portion of the CO2 contained in the air is chemically and/or physically bound/adsorbed at the surface of or within the adsorbents. During subsequent CO2 desorption, the adsorbent material is normally heated and, optionally, the partial pressure of carbon dioxide surrounding the sorbent can be reduced (PSA - Pressure Swing Adsorption) by applying a vacuum or exposing the sorbent to a purge gas flow, such as but not limited to steam. Thereby, the previously captured carbon dioxide is removed from the sorbent material and obtained in a concentrated form.

One of the main challenges for the energy and cost-efficient realization of DAC arises from the low concentration of CO2 in atmospheric air (nominally around 400 ppm as of 2019) and the delivery of the correspondingly necessary large volumes of atmospheric air to a suitable gas separation structure. Suitable gas separation structures containing enclosed sorbent material have been presented in US2017/0326494 and WO-A-2018083109 and can be applied to batchwise adsorption-desorption processes in which said structure containing sorbent material needs to be alternately exposed to a high-volume flow air stream (adsorption/contacting) and then to desorption conditions characterized by elevated temperatures and/or vacuum pressures down to e.g., 10 mbar(abs). This requires chamber structures, which on the one hand allow the sorbent material to be exposed to a high-volume flow of atmospheric air to adsorb CO2, and which can, on the other hand, appropriately seal the sorbent material from the ambient air during desorption and withstand sorbent material temperatures up to 130°C, mixtures of CO2, air, and water as vapor and liquid, as well as optionally, vacuum pressures down to 10 mbar(abs) or lower (if vacuum is required for the desorption). One such suitable structure is the unit disclosed in WO-A-2015185434. In general, particularly advantageous therefore is infrastructure which firstly minimizes pressure drop during adsorption flow through and secondly attributes the greatest portion of said pressure drop to the portion of the unit actually capturing CO2.

In the prior art there are many examples of cyclic adsorption/desorption processes which are typically conducted in long, narrow, thick wall columns with small flow cross sections. Said devices are used for pressure and/or vacuum swing-based gas separation and are typically operated with very short cycle times in the order of seconds to a few minutes, during which their thermal mass or thermal inertia does not play a major role. Further, the devices are typically subjected to high pressure flows with high adsorbate concentrations and can thus use openings and flow conduits significantly smaller than their cross section as pressure drops over said features are relatively small. For example, US 8,034,164 relates to multiple pressure swing adsorption columns operating in parallel and discloses details to column construction and assembly, details to control of flows and cycle optimization. US 6,878,186 refers to a method and apparatus for pure vacuum swing desorption in a classical adsorption column, and to processes and apparatuses of classical adsorption columns. Certain prior art systems such as WO-A-2013117827 describe a gas separation structure based on parallel passages which indeed seek to reduce the pressure drop while being contained in a cylindrical pressure vessel for PSA processes.

If vacuum is used for the desorption step, there is the problem of pressure drop over gas control structures at the inlet and outlet. A number of prior art systems disclose large actuated swinging lids which are further designated as flaps or dampers, with said units not typically designed for pressure differences higher than about 0.2 bar. Certain isolation valves are specifically suited to vacuum applications but must have a significant material thickness and are limited in sizes to handle the large forces of vacuum application. In consequence, such valves have a high thermal mass when applied to alternating heating/cooling steps and cannot offer the necessary through flow area. Further certain prior art systems may have actuating mechanisms. EP-0 864 819 discloses a rotating flap valve for a fume hood built into ducting for use in ventilation applications but unsuitable for vacuum. US2005/005609 relates to a bypass/redirection damper (valve) for gas turbine applications but unsuitable for vacuum. GB-A-621195 discloses a curved vacuum lid, which seeks to reduce the material thickness, but is incompatible with the requirement of minimum pressure drop over the flow cross section due to the effective thickness of the lid in the ducting. FR-A-1148736 and US 3,857,545 propose actuated vacuum lids and valves through which a vessel may be evacuated but are unsuitable to the many thousands of times larger airflows required in a DAC application.

A specific DAC vessel solution with a swinging lid is again found in WO-A-2015185434 however herein flow restrictions may decrease output. Some prior art systems for contacting and regeneration of solid sorbent material in DAC applications involve transferring the sorbent material and gas separation structure between a first region of air flow for adsorption and a second region in the form of a chamber for regeneration as illustrated in US 2012/0174779, US 2011/0296872 and WO-A-2013166432.

JP-A-2009172479 provides a carbon dioxide remover, which can efficiently adsorb carbon dioxide from the atmosphere and also can eliminate the carbon dioxide only by slight heating. The proposed carbon dioxide remover is equipped with a carbon dioxide adsorption film of a perovskite structure with an exposure surface to the atmosphere containing carbon dioxide molecules, a heater for heating the carbon dioxide adsorption film, and an exhauster for exhausting the space around the carbon dioxide adsorption film. The carbon dioxide adsorption film performs a chemical adsorption of the carbon dioxide molecule from the atmosphere, and the heater causes the carbon dioxide molecule adsorbed by the carbon dioxide adsorption film to be released.

WO2020/212146 discloses a separation unit for separating at least one gaseous component from a gas mixture, or arrangement of such separation units, wherein it comprises at least one circumferential wall element(s), said circumferential wall element(s) defining an upstream opening and an opposed downstream opening of at least one cavity containing at least one gas adsorption structure for adsorbing said gaseous component under ambient pressure and/or temperature conditions, or an array of at least two such cavities, wherein the separation unit comprises a pair of opposing sliding doors for sealing the openings of a cavity and preferably allowing for evacuating a cavity, and wherein the pair of opposing sliding doors can be shifted in a direction essentially parallel to the plane of the respective sliding door and to allow for flow through of gas mixture through the gas adsorption structure.

### SUMMARY OF THE INVENTION

It is therefore the object of the present invention to provide for an improved structure for gas separation processes, in particular for DAC processes, which has as little/few components as possible, is easy to operate, allows for efficient gas separation processes and which is highly reliable under long term use. Furthermore, the aim is to provide a structure with as little thermal load as possible, i.e. in particular the doors shall be of an as lean as possible structure while still allowing for evacuation of the cavity disclosed by the doors. Accordingly, the present invention proposes a separation unit, as well as an arrangement of separation units, as claimed, and a method of operating such a separation unit or an arrangement of such separation units, and uses of these elements, in particular for DAC processes.

More specifically, the present invention proposes a separation unit for separating at least one gaseous component from a gas mixture containing that component, preferably suitable and adapted to separate carbon dioxide and/or water vapor from ambient air.

According to a further aspect of the present invention, it relates to a method of operating a separation unit or station (or plant) as described above and containing at least one or an array of separation units for separating gaseous carbon dioxide from a gas mixture, preferably from at least one of ambient atmospheric air, flue gas and biogas, containing said gaseous carbon dioxide as well as further gases different from gaseous carbon dioxide, by cyclic adsorption/desorption using a sorbent material of said gas adsorption structure adsorbing said gaseous carbon dioxide in said separation units.

The method preferably comprises at least the following sequential and in this sequence repeating steps (a) - (e) carried out for each of the separation units in a coordinated manner:
(a) contacting said gas mixture with the sorbent material to allow at least said gaseous carbon dioxide (parts thereof or essentially all of the CO2) to adsorb on the sorbent material by flow-through through said unit (and thus through and/or over the sorbent material adsorbing at least part of said gaseous carbon dioxide) under ambient atmospheric pressure conditions and ambient atmospheric temperature conditions in an adsorption step (if ambient atmospheric air is pushed/pulled through the device using a ventilator for the like, this is still considered ambient atmospheric pressure conditions in line with this application, even if the air which is pushed/pulled through the reactor by the ventilator has a pressure slightly above or below the surrounding ambient atmospheric pressure, and the pressure is in the ranges as detailed below in the definition of "ambient atmospheric pressures");
(b) isolating said sorbent material with adsorbed carbon dioxide in said unit from said flow-through, preferably while essentially maintaining the temperature in the sorbent;
(c) inducing an increase of the temperature of the sorbent material, preferably to a temperature between 60 and 110°C, starting the desorption of CO2. This is e.g., possible by injecting a stream of partially of fully saturated or superheated steam, preferably by flow-through through the unit and over/through the sorbent, and thereby inducing an increase of the temperature of the sorbent material to a temperature between 60 and 110°C, starting the desorption of CO2;
(d) extracting at least the desorbed gaseous carbon dioxide from the unit (preferably most or all of the desorbed gaseous carbon dioxide) and separating gaseous carbon dioxide, preferably by condensation, in or downstream of the unit;
(e) bringing the sorbent material to ambient atmospheric temperature conditions and ambient atmospheric pressure conditions (if the sorbent material is not cooled in this step down to exactly the surrounding ambient atmospheric temperature conditions, this is still considered to be according to this step, preferably the ambient atmospheric temperature established in this step (e) is in the range of the surrounding ambient atmospheric temperature +25°C, preferably +10°C or +5°C).

In the context of this disclosure, the expressions "ambient atmospheric pressure" and "ambient atmospheric temperature" refer to the pressure and temperature conditions to that a plant that is operated outdoors is exposed to, i.e., typically ambient atmospheric pressure stands for pressures in the range of 0.8 to 1.1 bar abs and typically ambient atmospheric temperature refers to temperatures in the range of -40 to 60° C, more typically -30 to 45°C. The gas mixture used as input for the process is preferably ambient atmospheric air, i.e., air at ambient atmospheric pressure and at ambient atmospheric temperature, which normally implies a CO2 concentration in the range of 0.03-0.06% by volume, and a relative humidity in the range of 3-100%. However, also air with lower relative humidity, i.e., < 3%, or with lower or higher CO2 concentration can be used as input for the process, e.g., with a concentration of 0.1-0.5% CO2 by volume, so generally speaking, preferably the input CO2 concentration of the input gas mixture is in the range of 0.01-0.5% by volume. According to the proposed method, during the whole cycle the at least one or the plurality of air propelling devices in said cover unit is operated so as to withdraw air from the common separation station cavity, and wherein, if so present, the at least one or the plurality of air propelling devices in said bottom cover unit is operated so as to withdraw and/or push air into the common separation station cavity.

Alternatively, it is possible to operate such a unit so as to push air into the common separation station cavity using the air propelling devices in said cover and, wherein, if so present, to operate the at least one or the plurality of air propelling devices in said bottom cover to also push air into the common separation station cavity.

More generally speaking, the present invention relates according to a first aspect to a separation unit for separating at least one gaseous component from a gas mixture containing that component, wherein the separation unit comprises at least one contiguous and sealing circumferential wall element, circumferentially enclosing at least one cavity,
said at least one contiguous and sealing circumferential wall element defining an upstream opening and an opposed downstream opening of said at least one cavity,
and said cavity containing at least one gas adsorption structure for adsorbing said at least one gaseous component, preferably under ambient pressure and/or temperature conditions.

According to the invention, the separation unit further comprises a pair of opposing sliding doors for sealing the upstream opening and the downstream opening, respectively, of said at least one cavity in a closed state.

Each of the pair of opposing sliding doors, to open the closed cavity, is shifted in a direction essentially parallel to the plane of the respective sliding door, preferably in a vertical direction, to uncover the upstream and downstream opening, respectively and to allow for flow through of gas mixture through the gas adsorption structure.

Specifically, according to the present invention each of the pair of opposing sliding doors comprises a pair of curved wall elements, an outer wall providing for a convex outer shape of the sliding door facing the outside, and an inner wall providing for a concave inner shape of the sliding door facing said cavity.

The axes of curvature of said curved wall elements of one or both sliding doors are aligned parallel and in the same plane, or are coaxial, which means that the curved wall elements are preferably arranged so as to provide a mirror symmetric structure, and the curved wall elements are arranged essentially parallel to each other, normally with a slightly larger distance in a centre portion reducing to the edges.

Typically, connecting portions joining said wall elements at the edges are contacting and sealing against said circumferential wall element.

When mentioning the plane of the respective sliding door in the present context with curved wall elements, this plane is defined as a plane essentially tangential to the deepest portion in the concave inner shape of the inner wall of the respective sliding door, which typically is the central portion thereof.

For cases where the separation unit is to allow evacuation of the cavity to pressures less than atmospheric, this is intending to mean that the structure, if standing in an environment of ambient atmospheric pressure (around 1 atm, i.e. around 101,325 kPa), is able to withstand an internal pressure of pressures below 1000 mbar(abs), preferably being able to withstand an internal pressure of 700 mbar(abs), or of 500 mbar(abs) or of 100 mbar(abs) or more preferably of less than 10 mbar(abs). So the structure is provided to be able to withstand, e.g. pressures of e.g. in the range of 5 - 350 mbar(abs) or 5 - 200 mbar(abs) or even below that, e.g. 10 mbar(abs) or 5 mbar(abs). So the structure is preferably able to generally withstand under pressure differences between the outside and the interior space in the range of -0.3 bar(g) or -0.5 bar(g), preferably -0.95 bar(g), or -0.99 bar(g), or even - 0.9999 bar(g), so close to or even around -1 bar(g) as well as overpressure differences of up to +0.1 bar(g) or up to +0.5 bar(g).

In the description, by axial is meant the global direction of gas flow through the separation unit, which could be in any direction leading through the depth direction of the separation unit including from bottom to the top of the unit or likewise from top to bottom and all other variants irrespective if the flow locally changes direction in the unit with transverse meaning substantially perpendicular to the global flow of gas through the separation unit and the cavity irrespective of local flow direction deviations and can therefore mean substantially horizontal or vertical or indeed any direction in between. Further, in the description, gas separation is to be understood as the separation of a miscible gaseous species from a gaseous mixture and encompasses therefore gaseous streams such as air, flue, biological or geothermal gases or indeed any gaseous mixture.

The movable doors can have characteristic dimensions of (width, height) 0.6m x 0.6m up to 12m x 3.8m preferably 6m x 2.4m and can, as the circumferential wall forming the cavities, be made of metals (in particular aluminum, iron, steel, stainless steel, carbon steel), composites, ceramics or plastics (preferably glassfibre reinforced) or combinations thereof. Likewise, with the cavity not sealed from the gas flow by the moving door i.e. when opened to the gas flow - is characterized by a through flow cross section of characteristic dimension between 0.55x0.55m up to 11.75m x 3.8m and with a depth - the axial extension of the cavity between 0.1m and 1.8m, preferably between 0.2m and 1.2m. Overall, the envelope dimensions of a separation unit including doors can be limited substantially by those of an ISO 668 norm high top shipping container thereby enabling standardized, cost effective transport. It is to be understood by one skilled in the art, that such separation units can be combined to form larger systems by placing multiple separation units together and operating them as one plant.

According to a preferred embodiment of the present invention, the separation unit comprises at least one set of four contiguous and sealing circumferential wall elements, a lower wall element, an opposed upper wall element and two opposed lateral circumferential wall elements joining corresponding ends of the upper and lower wall element, and circumferentially enclosing said at least one cavity, said set of four contiguous and sealing circumferential wall elements defining the upstream opening and the opposed downstream opening, and wherein the lower wall element and the upper wall element are provided as convex inner walls providing for a concave inner shape facing said cavity, wherein the axes of curvature of said upper wall element and lower wall element are parallel to the axes of curvature of the walls of one or both sliding doors.

Generally preferably, the upper and lower wall elements, in particular in case where the curvature axes of the wall elements of the sliding doors are arranged in a horizontal plane, are arranged mirror symmetric to each other, the lateral wall elements are arranged parallel to each other, and also the pair of opposing sliding doors is arranged mirror symmetric to each other.

Typically, the curvature radius of the inner wall is the same or larger than the curvature radius of the outer wall. A particularly stable construction is made available if in a cross-section the wall structure in a central portion has the largest distance between the inner and the outer wall sheet, and to the edges this distance is successively decreasing. Preferably, the inner wall, the outer wall, or both, are provided as sheet elements, preferably from a metal or plastic (fibre reinforced) material (preferably, in particular in case of metal, and e.g. for steel, with a sheet thickness in the range of 5 mm 10 mm, more preferably with a thickness in the range of 3 mm - 8 mm), and wherein between the inner wall and the outer wall there is at least one void inter-wall cavity.

Preferably, in said inter-wall cavity, there is provided one or several stabilisation elements joining the inner wall and the outer wall, and wherein further preferably the said stabilisation elements are provided as wall elements, with or without openings, oriented in a direction perpendicular to the axes of curvature of said curved wall elements.

To open the closed cavity, each of the pair of opposing sliding doors is preferably first moved in a direction essentially parallel to the normal of the plane of the upstream and downstream opening, respectively, and is then shifted in a direction essentially parallel to the plane of the respective sliding door. For closing of the corresponding structure the steps are carried out in reverse order.

For the movement in a direction essentially parallel to the normal of the plane of the upstream and downstream opening, there is according to a preferred embodiment provided a movement mechanism which is mounted on the respective sliding door, wherein preferably said movement mechanism includes at least one lever mechanisms actuated on the respective sliding door.

Preferably, one or both sliding doors are mounted on a pair of vertical rails, preferably C or H rails, wherein preferably the doors are travelling in or on these rails with rollers, and wherein lever means are provided which allow to press the respective door to a corresponding contact surface of the respective opening at the position for closing, and to distance the door again from that sealing position to allow for sliding the door to free the respective opening.

Normally, the sliding doors are shifted in a direction essentially parallel to the plane of the respective sliding door to uncover and/or cover the upstream and downstream opening in a vertical direction by way of a cable attached to the respective sliding door, preferably by way of a drive, preferably a winch traction, which is located above an uppermost separation unit of a column of separation units to be opened/closed by said pair of sliding doors. According to yet another preferred embodiment, the sliding door and/or the respective opening of at least one cavity is provided with at least one circumferential sealing element, preferably in the form of at least one sealing ring and/or in the form of a sealing coating. Typically, in a direction away from said cavity and adjacent or close to said sealing element at least in a horizontal portion thereof, there is provided a contact member preferably along a horizontal contact line of the contiguous wall of the separation unit, and a door contact member along a preferably horizontal contact line, a contact surface of the contact member and a door contact surface of the door contact member contacting each other in the closed state, and wherein the door contact surface is inclined relative to the plane of the respective sliding door. Preferably these contact members are made for example of a plastic material, such as polyamide, polypropylene, polyethylene, preferably a thermoplastic material, so as to provide for some flexibility to compensate for geometrical imperfections of the wall elements due to thermal distortions or the like along the respective sealing line. According to a preferred embodiment, the door contact surfaces of the opposing horizontal contact lines of each sliding door are converging in a direction into the cavity, preferably each with an inclination angle relative to the normal of the plane of the sliding door in the range of 30-80°, preferably in the range of 40-70°, wherein preferably the inclination angle at opposing horizontal contact lines is the same with opposing sign. This arrangement allows for a self-centering shifting into the closed position, making sure the sealing is as optimal as possible.

According to another preferred embodiment, the inner wall, the outer wall, or both, are provided as sheet elements, preferably from a metal or plastic (fibre reinforced) material (for the thicknesses as preferred see further above), and wherein between the inner wall and the outer wall there is at least one void inter-wall cavity, and wherein stabilising protrusions or profiles, or both, protruding into the inter-wall cavity are provided on the inner wall, the outer wall, or both, wherein preferably both stabilising protrusions oriented in a vertical direction, and stabilising profiles, oriented in a horizontal direction, are provided on the inner wall.

In the cavity there can further be provided at least one stabilisation structure extending in a vertical or in a horizontal direction between opposing walls of the circumferential wall elements. Cassettes of adsorber material are preferably arranged between these stabilisation structures.

According to yet another preferred embodiment, such a separation unit comprises or consists of an array of at least two, preferably at least three, or at least four or in the range of 2-8 or 2-6 cavities 24 with circumferential wall elements enclosing the cavities and each housing respective gas adsorption structures, wherein said pair of opposing sliding doors is mounted to allow for alternatingly sealing one cavity of the separation unit as well as the other cavity(ies).

Typically, the cavities of the array are arranged adjacent to each other in one vertical column, wherein preferably the cavities of the array are arranged directly adjacent to each other.

Such a separation unit can be attached to or may encompass only one common evacuation unit, and/or only one common heating unit, and/or only one common collection unit for the gaseous component, and/or only one common drive at the upstream side and the downstream side for the doors, and/or only one set of louvres at the upstream side, in each case common for all cavities, while preferably for the cavities an common controllable gas or air propelling device is provided at the downstream side, preferably forming an upper horizontal wall of separation station cavity enclosed by at least four arrays of cavities. Furthermore, the present invention relates to a method of operating a separation unit or an arrangement of separation units as detailed above and containing an array of cavities, wherein the pair of sliding doors is positioned to seal one cavity of the array while the other cavities are open to flow through to the gas mixture, the sealed cavity is exposed to conditions so as to desorb and extract the gaseous component while the other cavities are driven by gas or air propelling devices to adsorb the at least one gaseous component from the gas mixture, and once the desorption in the sealed cavity is terminated, the pair of sliding doors is shifted to a next cavity, preferably the one in the array which has been exposed to gas mixture adsorption for the longest time span, to seal that next cavity, and then this next cavity is exposed to conditions so as to desorb and extract the gaseous component while the other cavities are driven by gas or air propelling devices to adsorb the at least one gaseous component from the gas mixture, wherein preferably that sequence of steps is continued analogously to seal and extract sequentially all the cavities in the array and to cyclically iterate that sequence of adsorption and desorption steps equal to the number of cavities in the array at least once, preferably at least 100 times, or at least 1'000 times. Also, the present invention relates to the use of a separation unit, an arrangement or an array as detailed above, or of a method as detailed above, for the separation of carbon dioxide and/or water vapor from ambient air, preferably using a process as defined in more detail above.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

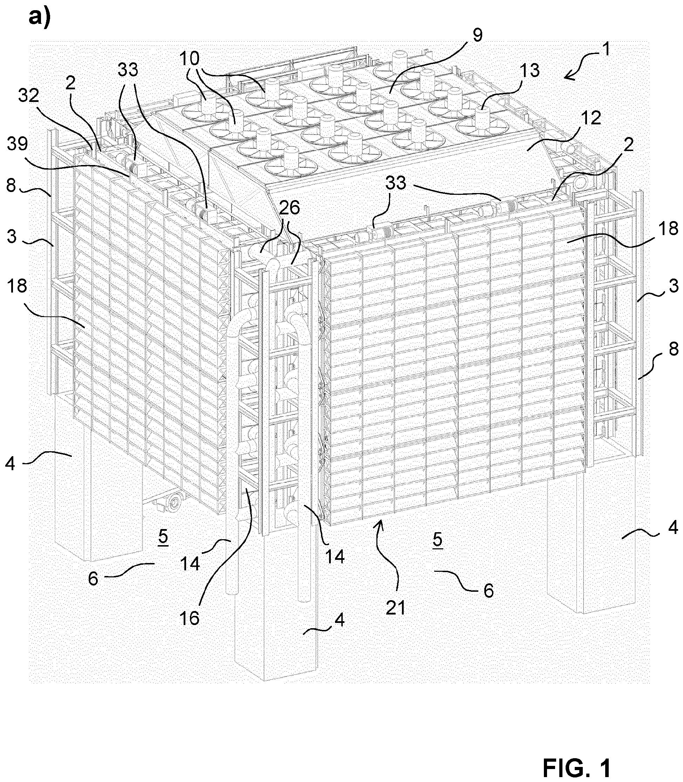

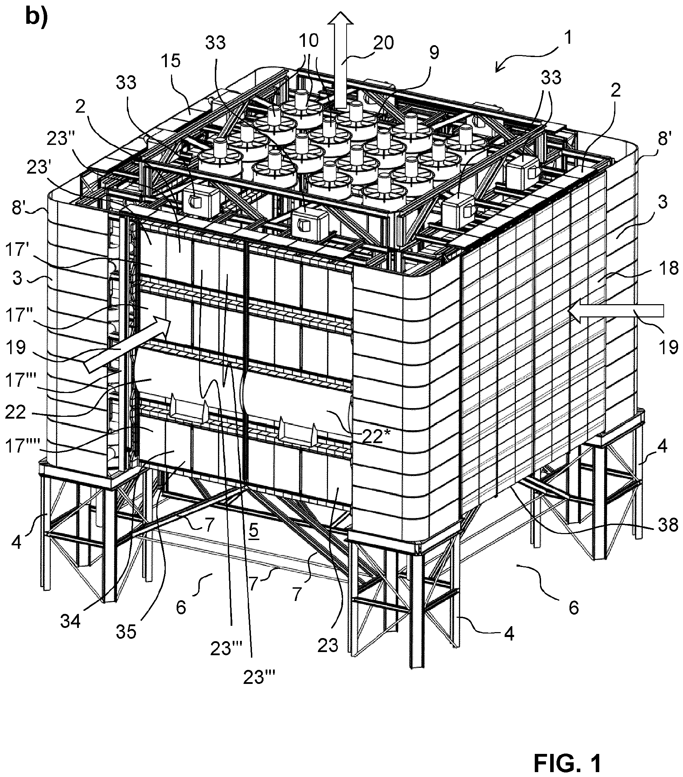

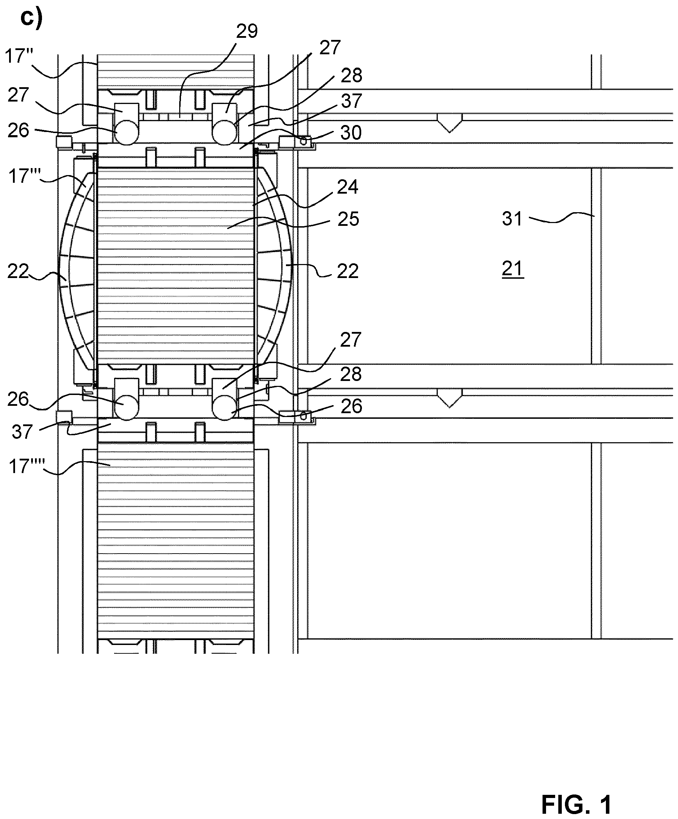

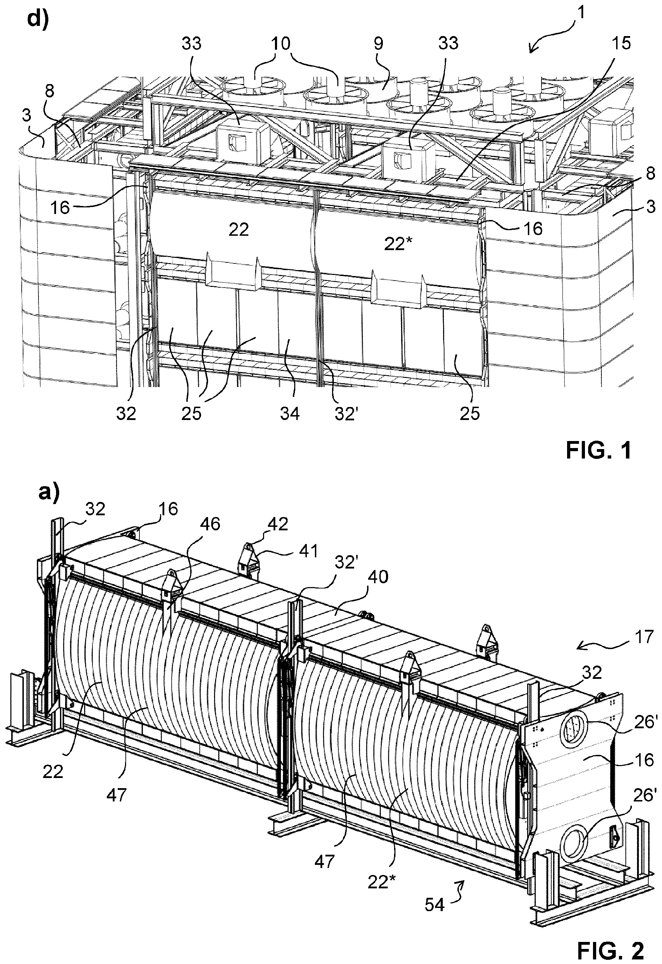

- Fig. 1: shows a separation station and parts thereof in different views, wherein in a) an isometric view is shown in an oblique viewing angle from the top, in b) an isometric view in an oblique viewing angle from the top with louvres removed of a slightly different embodiment than in a); in c) a detailed cut illustrating a possible supply of the sorbent cavities and in d) an isometric part view in an oblique viewing angle from the top, wherein the top portion is shown and a situation where the sliding door is in the uppermost position;

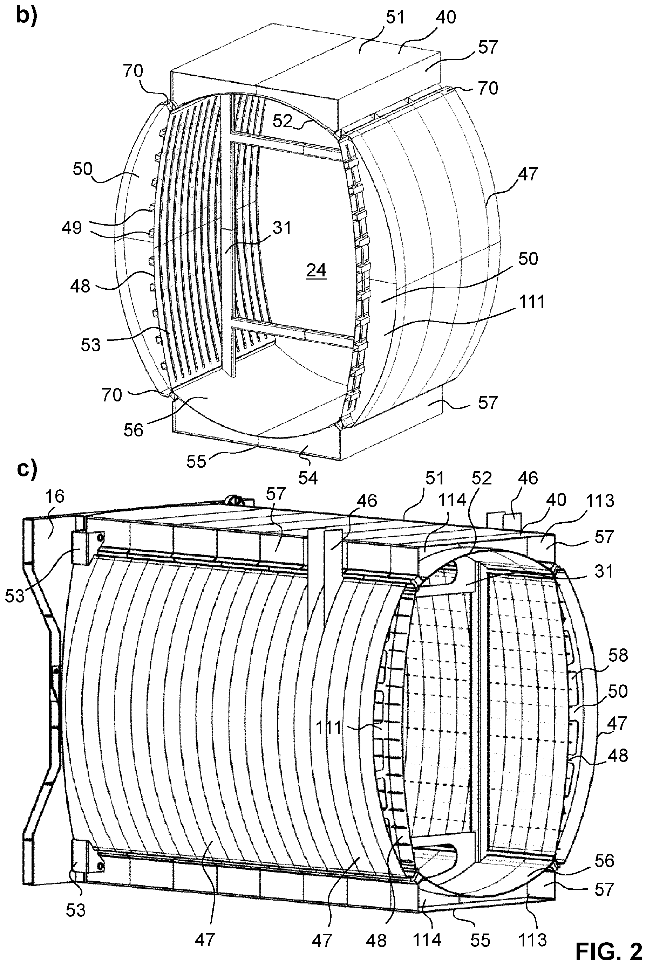

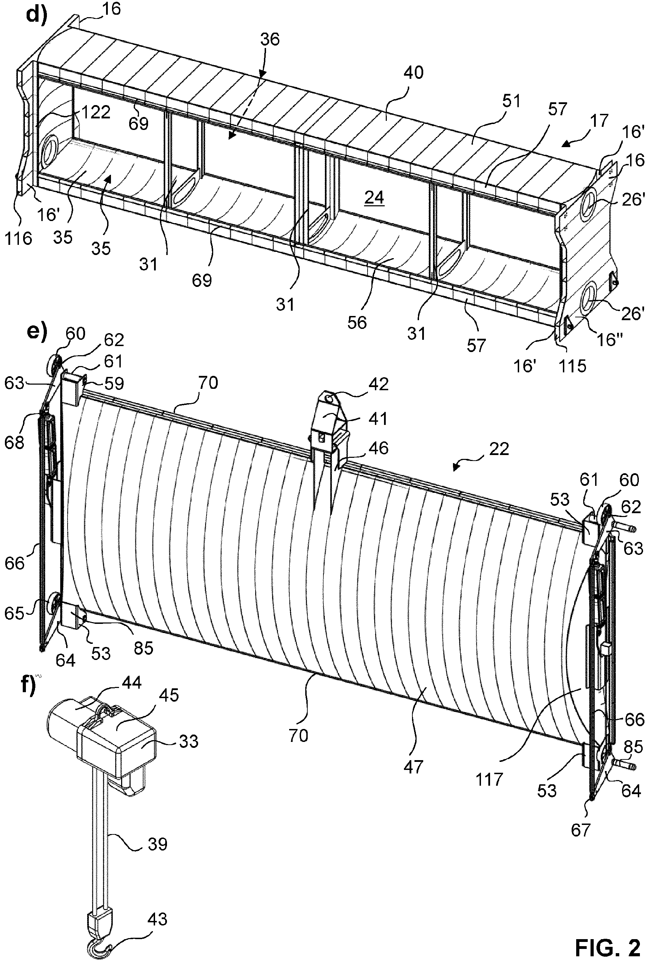

- Fig. 2: shows individual parts of a separation station, wherein in a) and isometric view of an isolated horizontal row is shown with the sliding door covering the openings, in b) an isometric view of a vertical cut through a horizontal row without adsorber elements; in c) another isometric view of a vertical cut through horizontal row in the edge region without adsorber elements, in d) an isometric view of the stationary part of an isolated horizontal row without adsorber elements; in e) an isometric view of a sliding door, and in f) an isometric view of the lifting mechanism;

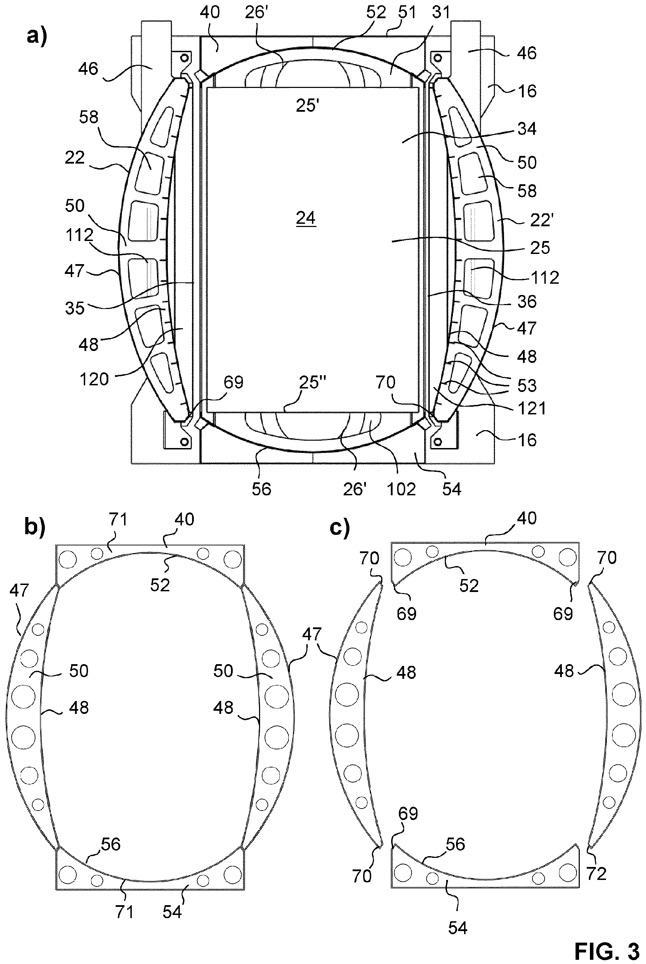

- Fig. 3: shows vertical cuts through an isolated horizontal row, wherein in a) the closed position is shown with adsorber element located in the cavity, in b) the closed position is shown without adsorber element located in the cavity, and in c) the half open position is shown without adsorber element located in the cavity and in which the doors are laterally shifted out of the sealing but not yet vertically shifted away from the row;

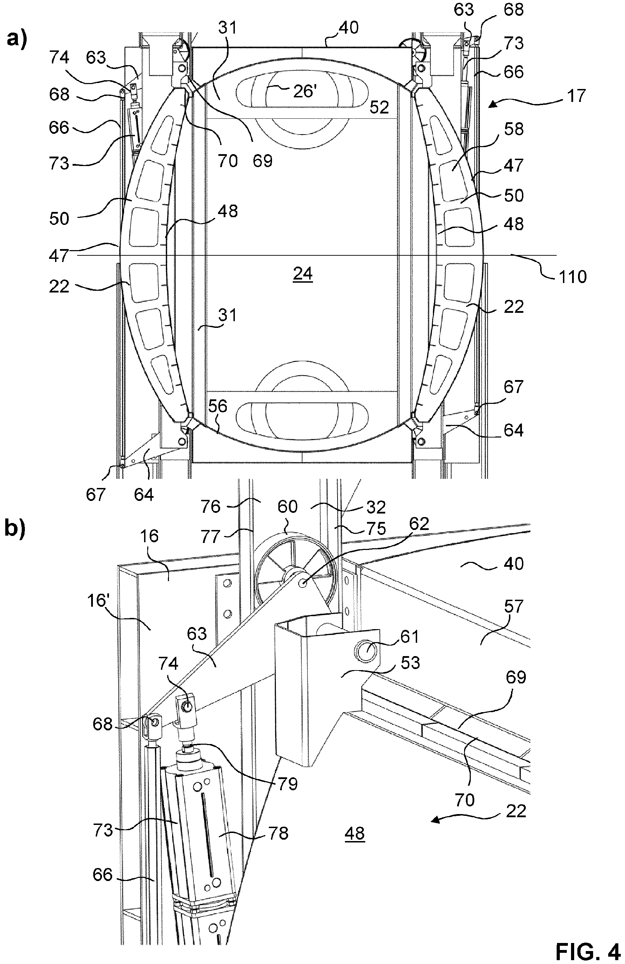

- Fig. 4: shows views of an isolated horizontal row, without adsorber element located in the cavity and including the closing mechanism on the sliding door, wherein in a) the closed situation is shown in a vertical cut and in b) an isometric view of the top portion of the lever mechanism;

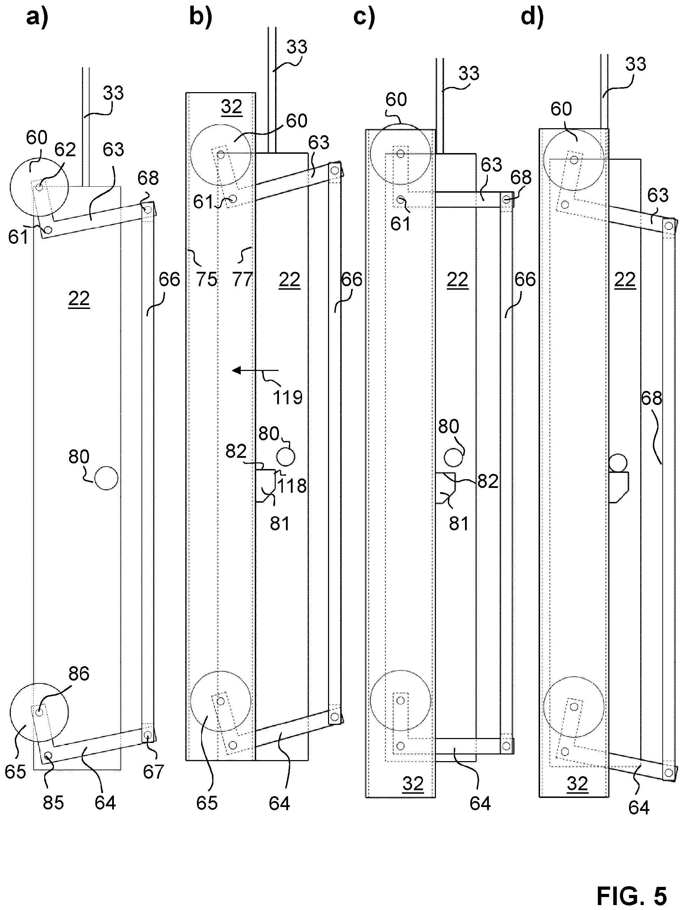

- Fig. 5: shows schematically the sliding door with the lever mechanism mounted on it, wherein in a) the sliding door alone is shown in a lateral view, in b) a lateral view of the situation is shown, when the door is vertically positioned for the closing process but still laterally displaced from the sealing portion on the stationary parts, in c) the halfway closed position is shown, in which the door has passed half of the lateral displacement into the sealing portion, and in d) the fully closed position is shown including further vertical lowering;

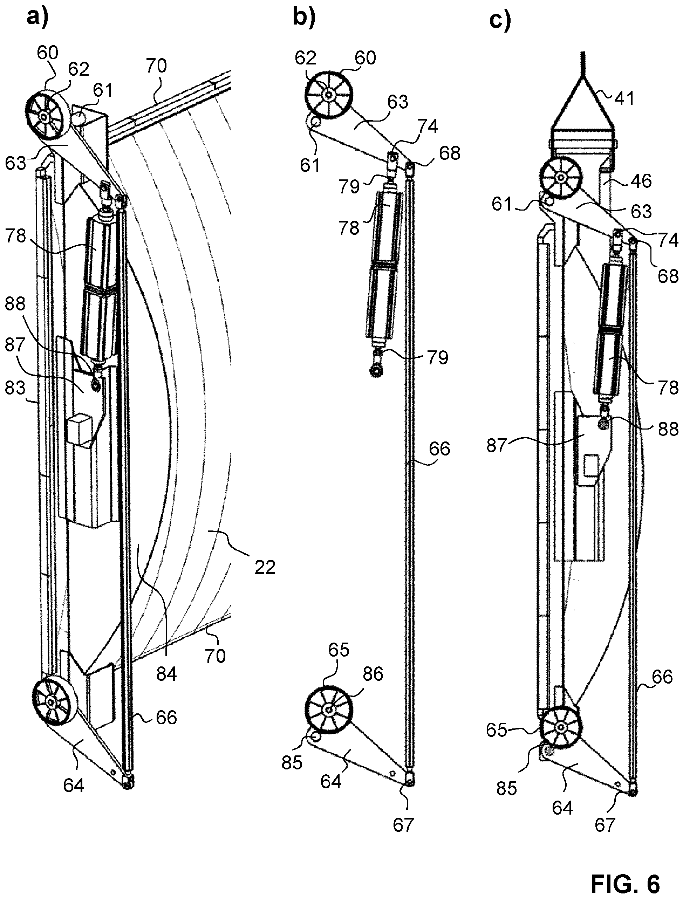

- Fig. 6: shows views of the lever mechanism mounted on the sliding door, wherein in a) an isometric view is shown of one side of a sliding door, in b) a lateral view of the lever mechanism without further door elements is shown, and in c) a lateral view of the lever mechanism with the further door elements is shown;

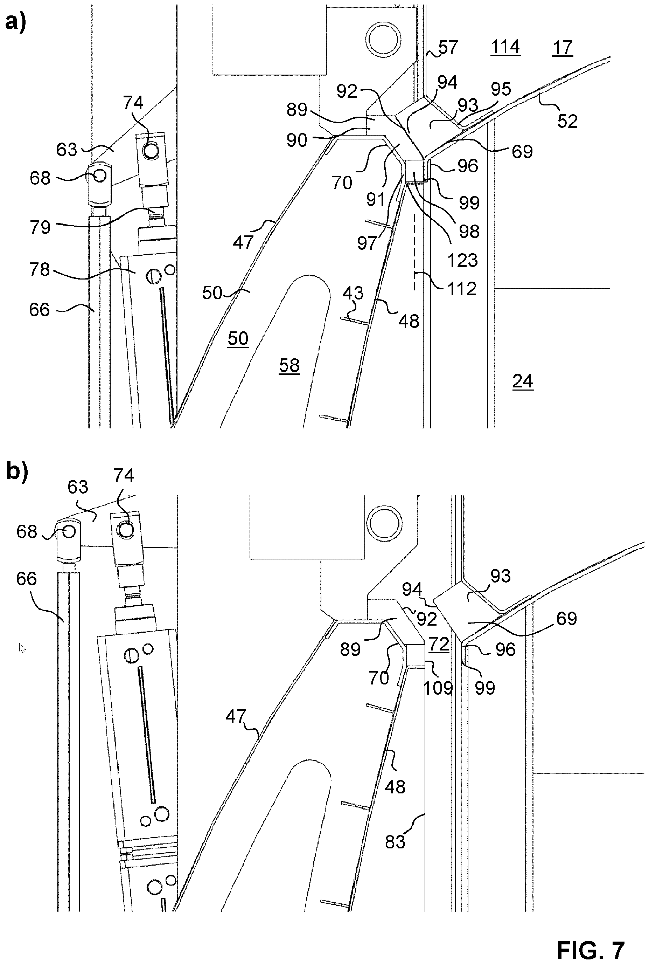

- Fig. 7: shows details of the contact region between the door and the stationary parts, wherein in a) a cut through the contact portion is shown in the closed position, and in b) a cut through the contact portion is shown in the open position;

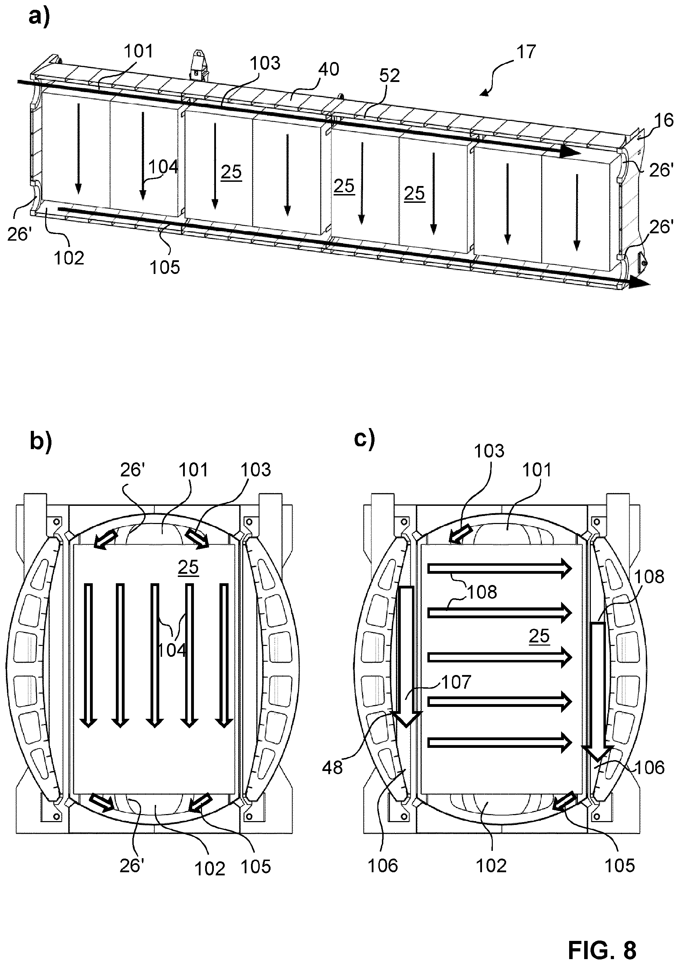

- Fig. 8: shows steam flow options using the proposed design, wherein in a) a lateral view of a vertically cut horizontal row including adsorber elements is shown with steam flow, in b) a corresponding cut in the other vertical direction including the schematic steam flow, and in c) an alternative steam flow scheme.

### DESCRIPTION OF PREFERRED EMBODIMENTS

**Fig. 1** shows a separation station 1 in different schematic representations.

The separation station 1 comprises four identical modular vertically arranged collector walls 2, which at the edges are connected and carried by vertical members 3 which act as stand posts for the separation station 1. The members 3 have protruding parts 4 by way of which the collector walls 2 and more specifically the lower horizontal edges 38 thereof are distanced from the ground, forming flow-through areas 6 below the collector walls and a free space 5 below the upper part of the separation station 1. There can be bracings 7 to stabilize the whole structure.

In this case the free space 5 below the upper part of the separation station 1, so below the lower horizontal edge of the collector walls 2, is open for inflow of air. However, to optimize the airflow through the collector walls 2, typically this free space 5 is covered by contiguous sealing walls, or the upper part of the separation station 1 may be covered by a horizontal contiguous sealing wall essentially at the level of the lower horizontal edge 38 of the collector walls 2. It is also possible to have a horizontal further collector wall 2 with sorbents closing the separation station cavity 21 to the bottom.

In these vertical members 3, tubing 14 and/or supply and/or control lines can be located, and in particular the upper part of the vertical members 3 can be provided as grid structures 8.

The collector walls 2 enclose one common separation station cavity 21, which to the top is covered by a cover unit 9 with an array of fans 10. In addition, this cover unit 9 comprises a support structure 11, baffle plates 12, and a cover plate 13 in which the fans 10 are mounted. Correspondingly, the cover unit 9 essentially seals the common separation station cavity 21 to the top.

The upper wall 15 of the respective collector wall abuts with the cover unit 9, and the lateral walls 16 are adjoining the vertical members 3, typically the lateral walls have a width, which corresponds to the width of the vertical members 3.

The common separation station cavity can be closed and sealed to the bottom, essentially at the height of the lower horizontal edge 38 of the walls 2, by a bottom cover plate (not illustrated).

In each collector wall 2, there is provided a two-dimensional array of in this case 32 rectangular separation units 34. Each separation unit 34 or rather the full row has an upstream opening 35, which is facing the outside of the separation station 1, and a downstream opening 36, which is facing the separation station cavity 21. The separation units 34 are arranged in a regular array forming collector rows 17, specifically an uppermost collector row 17', followed by in a downwards direction and adjacent to an upper collector row 17", followed buy in a downwards direction and adjacent to a lower collector row 17"', and terminated to the bottom by an adjacent lowermost collector row 17ʺʺ.

In the vertical direction these separation units form collector columns 23, specifically (see also **Fig. 1b**) forming a respective left most collector section 23', followed to the right and adjacent to the left collector row 23", followed to the right by further collector column sections and indirectly by way of these adjacent to the right collector row 23‴, and to finish the array with the right most collector row 23ʺʺ.

The airflow in such a separation station 1 is typically structured as illustrated in **Fig. 1b****,** namely the fans 10 withdraw air from the separation station cavity 21 such that it is expelled in a vertical direction illustrated by arrow 20, and such that it is sucked into the separation station cavity 21 in a horizontal direction as illustrated by arrow 19.

On the upstream side the collector walls and/or the separation units may comprise sets of louvres 18, which can be adjustable to control the direction of airflow.

In this embodiment, there are provided two separate horizontally extending sliding doors, a left one 22 as illustrated and a right one 22*, which each at the same time covers one half row of separation units 34 in one of the separation walls 2. These half doors 22 and 22* can either be moved synchronously or separately. There is provided a corresponding pair of vertically moving sliding door on the outer side 22, 22* and a pair of vertically moving sliding doors 22', 22'* on the inner side', and those pairs of inner and outer sliding doors are moving in synchrony and parallel to each other at the same height depending on the carbon dioxide capture cycle.

In the illustration in **Fig. 1c****)** the pair of sliding doors 22, 22* in the left front collector wall is in the uppermost position, i.e., covering the uppermost collector row 17', so this collector row or rather the collector units of that collector row are going through steps (b)-(e) as detailed above.

The collector units of the other rows of that collector wall 2 are going through adsorption according to step (a) as detailed above.

Each of the collector rows comprises a circumferential set of walls enclosing a sorbent cavity 24 (see also the further figures). The sliding doors have a curved convex profile to allow for an increased available vacuum without large thermal mass of the sliding door structure.

In these cavities 24 there are located sorbent cassettes 25, which for maintenance are provided as separate self-standing structures or a set of separate self-standing structures to be put into these cavities 24.

The sorbent cassettes 25 may, for example, comprise individual horizontal or vertical parallel layers coated with carbon dioxide reversibly adsorbing materials or comprise particulate material in corresponding air permeable containers for carbon dioxide adsorption. Materials suitable and adapted for this purpose are in particular primary and/or secondary and/or tertiary amine carrying polymer beads, which can be contained in corresponding mesh structures.

In this specific example and embodiment, horizontally adjacent cassettes 25 are directly adjacent and the circumferential wall elements which are adjacent can have separation walls or stabilization structures 31.

On the other hand, vertically adjacent separation unit rows 17 in this specific example and embodiment are arranged at a distance leaving an interspace 37 between the rows 17, and in this interspace 37 between the lower horizontal separation wall of the upper sorbent cavity 29 and the upper horizontal separation wall 30 of the lower sorbent cavity there is room for horizontal tubing 26 for the individual separation units and for control of the individual separation units and/or the corresponding sliding doors. This tubing 26 in this way can be ideally connected to the tubing 14 in the vertical members. The tubing 26 is connected to the corresponding separation unit 34 by way of inlets/outlets 27 and corresponding controllable valves 28.

The sliding doors 22 are mounted on vertically extending rails 32 which can be mounted on the vertical members 3 or at the lateral edges of the collector wall 2.

A motor 33 for each of the sliding doors 22 is provided, and it is located on top of or in the region of the upper wall 15.

Corresponding motors or more generally drive means 33 for the sliding doors 22 as well as the corresponding control means can also be located at the lateral edges of the collector wall or in or on the vertical members 3.

As one can see from **Fig. 1a****,** the sliding doors 22 on the entrance side are located and moving in an interspace between the collectors 17 and the louvres 18, which are arranged as an array over the full surface of the entrance area of each of the collector walls 2.

One of the advantages of the mounting of the sliding doors 22 as described in detail also further below is that using that mounting it is much easier to maintain and replace the sliding doors simply in that for maintenance they are lowered below the array of louvres 18 into the flow-through area 6, where the sliding doors 22 can be easily maintained without having to remove the array of louvres 18 and without having to use cranes or the like.

As one can see from **Fig. 1b**, the sliding doors 22 in this particular embodiment only cover one lateral half of each of the collector walls 2, i.e. there are two pairs of sliding doors 22 and 22* for each of the collector walls 2. Each of these pairs of collector walls 22 can be moved independently along the corresponding column comprising in this case in each row four adjacent sorbent cassettes 25, so the two horizontally adjacent sliding doors on each collector wall 2 can either be moved in synchrony and always in parallel as illustrated in **Fig. 1b** and **Fig. 1d**, it is however also possible to move the left one independent from the right one.

As one can see from **Fig. 1d**, where the array of louvres 18 is removed for better visibility of the sliding doors 22 and where both of the sliding doors, the left sliding door 22 and the right sliding door 22*, are located to close the uppermost row, each of the sliding doors is vertically guided for the movement in a corresponding rail 32. Since the two sliding doors 22 and 22* are adjacently arranged, it is possible to structure these rails, which will be detailed further below, as concerns the outer rail in the form of a C profile, where the profile is open in a direction facing the respective sliding door 22, and the central rail 32' can either be a pair of C-profile rails but it can also take the form of a H-profile, with the corresponding openings facing to the left and to the right.

More specifically, further examples and elements thereof of a separation station as illustrated in **Fig. 1** or modifications thereof are illustrated in the following figures. Reference numerals in this following set of figures designate the same elements or equivalent elements as already discussed in the context of Fig. 1.

**Fig. 2a** illustrates an isolated collector row 17 of a separation station as illustrated in the previous figure. It is closed by a pair of sliding doors 22. Along a collector wall 2 a series of these collector rows 17 as illustrated in this figure is stacked vertically as modular elements. Each of these collector rows is provided with a top wall 40 and a bottom wall 54 (see the following figures). Laterally, the collector row is closed by lateral walls 16. These lateral walls are provided with openings 26' for guiding tubing for withdrawing carbon dioxide and/or steam or for introducing steam, or control lines, etc. These openings 26' are typically provided as pairs in an upper portion of the side wall 16 and a lower portion so as to allow introduction and/or withdrawal of media from an interspace above and below, respectively, of the corresponding sorbent cassettes 25 located in the cavity 24 which is bordered by the top wall 40, the bottom wall 54 and the two side walls 16 as well as the sliding doors 22 if in closed state.

The sliding doors are mounted in vertical rails 32, the two outer rails 32 are provided as C profiles, while the central rail 32', which is guiding both sliding doors 22, is provided as a H-profile. Each of the doors has a member 46 for attachment of an attachment element 41, which in turn typically has an eyelet 42 for attaching the drive rope 39 for coupling to the motor 44. The member 46 is attached to the convex outer wall 47 of the respective sliding door, it may also be directly or indirectly be attached to further internal structures of the respective sliding doors, for example to vertical stabilisation elements 50 located in an interspace between the convex outer wall 47 and the concave inner wall 48 of the sliding door wall.

**Fig. 2b** illustrates an isometric view of a cut through a collector row 17. Here one can see how each of the sliding doors comprises a convex outer wall 47 and a convex inner wall 48, joined at the upper and lower horizontal edges by an edge profile 70. The walls 47 and 48 enclose an interspace 111, and in this interspace 111, which is void,. The interspace 111 can even be evacuated or filled with a gas of low thermal conductivity if needed, for increasing the thermal isolation. Further, stabilising structures can be provided. In this case, there are a number of vertical parallel stabilisation webs 50, connecting the convex outer wall 47 and the concave inner wall 48 over their full vertical extension. As one can see from the following figure, these webs 50 can be provided with through openings 58 to reduce the amount of material and to allow circulation in the full interspace between the convex walls 47 and 48.

In order to further stabilise in particular the concave inner wall 48, this may be provided with vertically extending stabilisation structures 53 or profiles, which can be separate webs which are welded to the corresponding sheet of the inner wall, or they can be formed as folding is from the same material as the sheet of the inner wall. Typically they extend into the interspace 111.

Furthermore, there can be provided the illustrated horizontally extending stabilisation profiles 49, and, in particular, the combination of these vertically and horizontally extending stabilising elements 49 and 53 provides for a very high stability of the inner wall without a high thermal mass, which is needed if the sorbent cavity 24 is to be evacuated in the carbon dioxide capture process.

As one can also see in this figure, the top wall 40 and the bottom wall 54 are also provided as structures providing a respective concave upper inner surface 52 and lower inner surface 56. In cross section, an essentially oval structure results for the cavity 24, which provides for high stability at low thermal mass. To provide for this structure of the upper and lower wall 40 and 54, respectively, each of them is provided with a flat top and bottom wall 51 and 55, respectively, and with vertical joining walls 57 for joining to the respective concave elements 52 and 56, respectively.

In the cavity 24, there can be provided further stabilising structures, in this case the structures are given by the stabilisation struts 31, which extend in a vertical direction. The sorbent cassettes 25, in this case two of them, are located between the stabilising structures 31. It is further noted that between adjacent cavities 24 which are controlled in flow-through by individual sliding doors 22, there can be provided fully isolating and separating walls similar to the side walls 16, so referring now to **Fig. 2d** the central stabilising structure 31 can also be provided as a separating wall. Only in that case it is possible to operate the pairs of sliding doors as illustrated in **Fig. 2a** independently, in the case as illustrated in **Fig. 2d** where there is no central separating wall between a pair of rows of 4 sorbent cassettes 25 but only a stabilising structure 31, the sliding doors which are adjacent need to be synchronously operated.

**Fig. 2c** illustrates another isometric view of a cut, in this case in particular illustrating that also the top 40 and the bottom wall 55 are provided as double-walled structures enclosing a corresponding interspace 113. To stabilise the structures also stabilisation webs 114 can be provided. Again, to improve isolation it is possible to evacuate this interspace 113 or to fill it with a gas of low thermal conductivity. In this figure, also specifically the members 46 attached to the convex outer wall 47, are is illustrated, as well as the attachment member 59 for the lever mechanism, which is attached to the outer convex wall 47 in an area adjacent to the side wall 16, as will be detailed further below.

**Fig. 2d** illustrates an isometric view of a collector row 17 without sliding doors and without sorbent cassettes 25. This illustrates the actual cavity 24, which extends over the full width of such a row in this case, i.e., for that case of collector row 17 it is mandatory that adjacent sliding doors 22 and 22* move in synchrony. Also, in this case, one can recognise the horizontally extending contact lines 69 on the bottom and on the upper edge of the upstream opening 35 and analogously the downstream opening 36. These contact lines provide for the sealing portions with closing doors 22.

Also, one can see that the side wall 16 are provided as double-walled structures with an inner wall 16' facing the cavity 24 and an outer wall 16" facing the outside. Also, the inner wall 16' can be structured to provide for a concave surface facing the cavity 24 as one can see in this figure, increasing the resistance to vacuum also in this area. The interspace 115 between these sheets 16' and 16" can be further stabilised by corresponding, in this case horizontally extending joining webs 116.

**Fig. 2e** illustrates an isometric view of a sliding door 22 suitable and adapted to cover one half of collector row 17 as illustrated in the preceding figure. As one can see from this figure, laterally the convex outer wall 47 and the concave inner wall 48 are connected by a lateral joining wall 117 forming the boundary of the into wall cavity 111 in a lateral direction. Also, in this case, one can recognise how the lever mechanism for moving the sliding door in a horizontal direction into the corresponding sealing portion of the respective upstream opening and downstream opening 35 and 36, respectively, is mounted on the sliding door 22. At the corners, there are provided the above-mentioned attachment members 59 which are connected with the convex outer wall 47, the lateral wall 117 and, if needed, also with the edge profile 70. Around an axis 61 mounted in the respective attachment member 59, a lever plate 63 of triangular shape is provided. Is rotatable around the axis 61 essentially in one edge of the triangle and in turn carries a respective wheel in another edge of the triangle, in case of the upper lever mechanism the upper wheel 60, and in case of the lower lever mechanism the lower wheel 65. In the remaining edge of the triangle a coupling bar 66 is rotatably mounted around the joint 67 and 68, respectively, such that the upper lever plate 63 and the lower lever plate 64 at the respective lateral edge of the sliding door 22 can only rotate conjointly in the same direction, so the lever plates 63 and 64 are fully coupled. Due to the triangular shape rotation of these lever plates 63 and 64 around the axes 65 and 85, respectively, also leads to a displacement of the wheels 60 and 65. In the position as illustrated in this figure, rotation of the lever plates leads to a displacement of the wheels 60 and 65 in an essentially horizontal direction perpendicular to the plane of the sliding door 22. Also the drive mechanism for that lever arrangement is located on the sliding door 22 as will be detailed further below.

**Fig. 2f** illustrates the above-mentioned motor 33 for moving the sliding doors in a vertical direction to free the respective upstream and downstream opening 35 and 36, if needed in the process. The motor has an actual drive motor 44, a housing 45 typically including a gear and control elements, and a drum is typically located in that housing for the rope 39, at the lower end of which an attachment hook 43 is provided to be engaged with the above-mentioned eyelet 42 of the attachment element 41 on the sliding door 22.

**Fig. 3a** illustrates a cut through a collector row 17 which is closed by a pair of sliding doors 22, so which is enclosing a cavity 24. A sorbent cassette 25 is located in the cavity 24. As one can see, between an upper surface 25' of the sorbent cassette and the concave inner wall 52 of the top wall 40 there is a cavity 101 for flow-through of media. An analogous cavity 102 is formed by the lower surface 25" of the sorbent cassette 25 and the concave bottom wall 56 of the bottom wall 54. Also, to the left and to the right of the sorbent cassette there are provided cavities 120 and 119 between the corresponding walls of the sorbent cassette facing the inlet and the outlet opening 35 and 36, respectively, and the respective concave inner walls 48 of the left and right inner and outer sliding wall 22 and 22', respectively. In this figure also for illustration purposes the plane 112 of the respective sliding doors 22 and 22' is schematically illustrated, the plane 112 is essentially defined as the plane tangential to the deepest point in the concave inner surface provided by the inner wall 48, which typically is a plane perpendicular to the plane of the inlet and outlet opening 35 and 36, respectively. The planes 112 for the inlet sliding door 22 and the outlet sliding door 22' are normally perpendicular as illustrated in this figure.

**Fig. 3b** illustrates together with **Fig. 3c** the closed and the open position of the sliding doors in schematic cross-sectional view, respectively. The situation is illustrated by way of the corresponding walls 47 and 48 of the sliding doors including the stabilisation web 50, and on top by showing the top wall 40 with the concave inner wall structure 52 and a corresponding stabilisation web 114 which in this case is given as a vertical stabilisation 71 with through openings, and similarly on the bottom between concave inner side wall 56 of the lower wall 54. As one can see, the horizontal contact line 70 of the sliding door and the one of the stationary structure 69 are abutting in the closed position and in the open position there is provided a gap 72. For optimal load transfer, there is provided a contact surface by these horizontal contact lines 69 and 70, which is essentially tangential to the curvature of the corresponding adjacent wall sections. In other words, in the upper left corner illustrated in these figures, the contact surface of 69 and 70 is essentially perpendicular to the tangent to the cross-sectional curvature of 52 and 48 at this contact point. Since the curvature of 52 and 48 is not necessarily the same, the orientation of this contact surface is typically chosen in a direction between the tangent to 52 and 48 at the contact point, for example, in the middle of the angle between the two tangents at this contact point.

**Fig. 4a** illustrates a cut through a collector row 17 which is closed by a pair of sliding doors 22, so which is enclosing a cavity 24. No sorbent cassette is located in that cavity for illustration purposes. As one can see in this figure, in the closed position the horizontal edges of the sliding doors or rather the corresponding edge profiles 70 but with the corresponding horizontal contact line 69 on the stationary structure. This is where the sealing takes place, details of which will be explained further below. Also, one can see that the cavity 24 in this cross-section forms an essentially oval profile, which is bordered by the concave lateral walls 48 and on top by the concave wall portion 52 and on the bottom by the concave wall portion 56. As one can see from this figure, the curvature of the top and bottom walls 52 and 56 are essentially forming a circle with a common centrepoint, while the two lateral shapes provided by the inner walls 48 are flatter and have a larger radius. Also, here one can see that the top lever plate 63 is actuated by an actuation mechanism 73, which is coupled to the lever plate 66 in a region close to the joint 68 between the coupling bar 66 and the lever plate 63. This actuation mechanism 73, which will be detailed further below, is also located in mounted on the respective sliding door 22.

**Fig. 4b** illustrates in an isometric perspective view the details of the lever mechanism at one of the corners of the sliding door 22. Here one can see that the upper wheel 60 is running in the recess provided by the rail 32. As pointed out above, the rail takes the form of a C-profile, i.e. it comprises two rolling surfaces, and in a rolling surface 75 and an outer rolling surface 77, which are arranged essentially parallel to the plane of the sliding door, and which act as rolling surfaces for the wheels 60 (and 65, in case of the lower roller). The 2 webs 75 and 77 are joined by a vertically extending joining webs 76, arranged perpendicular to the webs 75 and 77. The distance between the webs 75 and 77 essentially corresponds to the outer diameter of the wheel 60.

Also, this figure one can see how the actuation mechanism is realised, it comprises a pneumatic cylinder 78 (can also be hydraulic or a linear motor), the pneumatic piston 79 of which is rotatably mounted by way of joint 74 on the lever plate 63 in the vicinity of the joint 68 connecting the joining bar 66 to the lever plate 63.

**Fig. 5** illustrates very schematically, and without illustrating the concave nature of the sliding doors, which as concerns the lever mechanism is anyway not mandatory, how the lever mechanism actually works.

**Fig. 5a** illustrates in a schematic side view the sliding door 22 with the corresponding lever mechanism. The lever plate 63 in this case to illustrate the double lever nature of the plate is provided as an L shape, with in the upper case one lever bar between the actual central lever axis 61 and the axis 62 of the roller 60 and one lever bar between that axis 61 and the joint 68 connecting to the connecting bar 66. The two bars or arms of the lever plate 63 in this case are located in an essentially perpendicular manner, however also different angles are possible depending on the geometric conditions. Also illustrated is the rope 39 on which the sliding door 22 is hanging.

Furthermore there is provided a laterally extending stop protrusion 80 on the sliding door, having in this case a circular cross-section, and the function of this stop protrusion 80 will be detailed further below.

The lower lever mechanism is essentially a copy of the upper lever mechanism, and the upper and the lower lever mechanism with the lever plate 63 and the lever plate 64, respectively, are fully rotatably coupled by the coupling bar 66 connected by way of the joints 68 and 67 to the upper and lower lever plate 63 and 64, respectively.

**Fig. 5b** illustrates the situation when the sliding door 22 by way of rope 39 has been vertically positioned at a height which is horizontally in front of the corresponding inlet or outlet opening 34 or 35. At this position, the motor 44 is stopped, so the sliding door does not further travel in a vertical direction any more, the upper wheel 60 and the lower wheel 65 being caught in a horizontal direction between the two running surfaces 75 and 77 of the rail 32 as described above.

Notably, at the rail 32 or somewhere at the lateral wall 16, there is provided a stationary stop protrusion 81. In the typical vertical displacement position of the lever mechanism, the relative horizontal spacing of the stop protrusion 80 fixed on the sliding door 22 and the outer face 118 of the stop protrusion 81 on the rail 32 is just sufficient that vertical travelling of the sliding door 22 is not impeded by the stop protrusion 81.

Starting from the position as illustrated in this figure the lever mechanism is now actuated such that the lever plates 63 and 64 rotates in a clockwise direction, this is initiated by a corresponding actuation mechanism 73 which is mounted on the sliding door but not illustrated in this figure. Rotation around axis 61 in a clockwise direction has the effect that the sliding door 22 travels essentially in a horizontal direction to the left, schematically illustrated by arrow 119.

**Fig. 5c** illustrates the halfway closed position, essentially at the moment when the lever arm between axis 61 and 68 is in a horizontal orientation. The horizontal displacement can be seen in particular by focusing on the relative position of the stop protrusion 80 on the sliding door and the stop protrusion 81 which is stationary, which are located above each other now. From this intermediate position the lever plates 63 and 64 are further rotated in a clockwise direction until having reached the desired horizontal displacement, in this case in a left direction.

This position is then essentially what is illustrated in **Fig. 5d****.** However, in order to make sure that there is exactly the proper alignment of the sliding door 22 and the corresponding opening in the stationary structure, and in order to avoid that the rope 39 is unnecessarily always under tension, after the lever bars 63 and 64 having reached the desired rotational position the tension of the rope 39 is decreased such that the sliding door 22 lowers slightly more in a vertical direction until the stop protrusion 80 on the sliding door 22 comes into contact with and abuts on the contact surface 82 of the stop protrusion 81. By this abutment the twofold aim is reached, the abutment provides for exact positioning (abutments are provided on both lateral sides of the sliding door, and there can be upper and lower abutments on each of the lateral sides), and it provides for making sure the weight load of the sliding door in the closed position is not carried by the rope 39 or the corresponding motor but by the stationary structure.

**Fig. 6** illustrates further details of the lever mechanism. In particular, **Fig. 6a** illustrates, in a isometric perspective view, how the pneumatic cylinder 78 is attached in the region of the lateral sidewall 117, which in this case is provided as a side wall 84, which is not perpendicular to the plane 112 of the sliding door but which is inclined. Due to this inclination the joint 88 rotatably attaching the actuating mechanism 73 or rather the pneumatic cylinder 78 to the sliding door 22 is mounted on a corresponding attachment member 87, which is attached to the front most part of the lateral side wall 84 which forms a vertical contact line 83 which contacts and seals with a corresponding vertical contact line 122 (see Fig. 2d). Also corresponding power supply elements, converters, as well as control elements, as schematically illustrated, can be located in the same region and to the corresponding mounting structure 87. The mounting structure as illustrated takes the form of an L profile to allow for a mounting plate for the pneumatic cylinder 78 which is perpendicular to the direction of the sliding door, and which is still contacting the inclined rear portion of the lateral sidewall 84 of the sliding door wall structure.

**Fig. 6b** illustrates only the lever elements of the sliding door without the actual wall structure of the sliding door, and **Fig. 6c** illustrates the same with the sliding door, both in a lateral view. As one can see, a simple but reliable compact structure is provided by arranging for the illustrated closed position the pneumatic cylinder 78 and the connecting bar 66 almost parallel and adjacent to each other.

**Fig. 7** illustrates the specifics of the contact portion between the sliding door and the corresponding stationary structure in vertical a cross-section horizontal to the plane 112 of the sliding door 22 and the corresponding inlet/outlet opening of the stationary structure. Specifically, **Fig. 7a** illustrates the closed position where there is a sealing contact between the sliding door and the stationary structure, and **Fig. 7b** illustrates the open position, where there is a gap 72 between the corresponding contact line 69 on the stationary structure and the contact line 70 on the sliding door.

As concerns the stationary structure, this contact region is structured in that the convex top wall 52 ends with a vertical flange portion 96 which is slightly tilted relative to the curvature of the wall 52. The outward facing surface 99 of that flange portion 96 provides the contact surface for the actual sealing element of the sliding door as will be detailed further below. Furthermore the vertically extending adjoining wall 57 of the top wall structure 40 comprises an inclined wall portion 95 bending inwards into the cavity 114 which is attached to the inward facing surface of the wall 52. In the corresponding recess there is located a horizontally extending contact member 93, which is typically made from a plastic material, for example is made from polyamide, in particular from PA6 or PA6 or blends thereof. The contact member 93 is firmly attached in that position, it can be glued to the corresponding contact portions on 52 and/or 95, or it can be attached by screws or rivets or a combination thereof.

On the other hand in the edge portion 70 of the sliding door 22 one can see here how the edge profile 70 is connected to the convex outer wall 47 and the convex inner wall 48, and how the edge portion is a structured sheet which comprises contact portions for fixing to the corresponding walls 47 and 48 as well as at least one vertical portion 97 in closed position facing the contact surface 99 as mentioned above and parallel to that contact surface. Attached to this vertical portion 97 there is provided an elastic sealing element or sealing profile 98, which is typically glued to the corresponding vertical portion 97 or embedded in corresponding form closure (e.g. dovetail) structures or the like provided on the vertical portion 97 for easier replacement. To make sure there is proper alignment of this elastic sealing element 98, the concave inner wall 48 comprises a terminal bent flange portion 123 extending in a horizontal direction, so that the elastic sealing element 98 is properly located and positioned in a horizontal direction by way of portion 97 and in a vertical direction by portion 123. The elastic sealing element 98 can also be attached to the portion 123 or to both the portion 123 and 97.

Above that portion with the elastic sealing element 98 there is provided another contact member 89 in the form of a horizontally extending bar profile, typically made of the same material as the above-mentioned contact member 93 on the stationary structure. In this case the contact member 89 wraps around the contour of the edge profile 70 in that it has a horizontal portion 90 and an inclined portion 91. The outward facing surface 92 of the inclined portion 91 forms the contact surface to face and contact the above-mentioned contact surface 94 of the contact member 93 on the stationary elements. In closed position of the contact surfaces 92 and 94 abut, and due to the choice of the slightly deformable material of the elements 93 and 89 these contact portions make sure there is proper positioning and well established contact in the edge portion is 69/70 even if the rest of the stationary and sliding door structure for example for thermal deformation reasons would not be fully aligned. As mentioned above, the orientation of the contact surfaces 92/94 is essentially a plane perpendicular to the tangent to the contour of the concave wall 52 or a slight modification thereof to also take account of the tangent to the contour of the concave inner wall 48 and/or the convex outer wall 47 of the sliding door structure to ideally transfer the forces in the contact region and to make sure there is no or as little as possible shear forces acting in particular on the elastic sealing element 98.

**Fig. 8** illustrates possible steam flow made available in the proposed structure. Specifically, in **Fig. 8a** it is shown how after closure of the cavity by the sliding doors steam can be introduced as illustrated by arrow 103 into the cavity 101 above the sorbent cassette 25 to travel fully along that interspace 101 in a horizontal direction between top wall 40 and the sorbent cassettes. Then the steam travels through the correspondingly structured sorbent cassettes 25 in a vertical direction as illustrated by arrows 104 schematically, to then exit the cavity 24 again as schematically illustrated by arrow 105 in the bottom interspace 102. Corresponding tubing can be provided through the openings 26' in the side wall 16. This flow path is also illustrated in a cross-sectional view in **Fig. 8b**, but also an opposite steam flow scheme is possible, and in **Fig. 8c** an alternative possibility is shown in which introduction and extraction is by way of the upper and lower cavities 101 and 102, respectively, and by way of the lateral cavities 106 left and right of the sorbent cassettes as illustrated by arrows 107 and 109, respectively. In this case steam travels in the same or opposite direction as illustrated by transverse arrows 108 as in the carbon dioxide capture phase, while for the case as illustrated in the preceding figures the steam travels in a direction orthogonal to the ambient air flow during the capture phase. Depending on the geometrical conditions in the sorbent cassettes and of the sorbent cassettes and depending on the process the one all the other steam flow through can be more efficient.

### LIST OF REFERENCE SIGNS

| | | | |
|---|---|---|---|
| 1 | separation station | 9 | cover unit with fans |
| 2 | collector wall | 10 | fan |
| 3 | vertical member | 11 | support structure of 9 |
| 4 | protruding part of 3 | 12 | baffle plate of 9 |
| 5 | free space below upper part of 1 | 13 | cover plate of 9 |
| | | 14 | tubing/supply/control lines in 3 |
| 6 | flow-through area between 4 | | |
| 7 | bracing | 15 | upper wall of 2 |
| 8 | upper part of 3, grid structure | 16 | lateral wall of 2 |
| 8' | covering of 8 | 16' | in a sheet of 16 |
| 16" | outer sheet of 16 | | cassette |
| 17 | collector row | 26 | horizontal tubing |
| 17' | uppermost collector row | 26' | opening in 16 for 26 |
| 17" | upper collector row | 27 | inlet/outlet of 26 |
| 17‴ | lower collector row | 28 | valve |
| 17ʺʺ | lowermost collector row | 29 | lower horizontal separation wall of upper sorbent cavity |
| 18 | louvres | | |
| 19 | essentially horizontal inflow of air | 30 | upper horizontal separation wall of lower sorbent cavity |
| 20 | essentially vertical outflow of air | 31 | vertical separation/stabilization walls/structures between sorbent sections |
| 21 | separation station cavity, enclosed space of separation unit | | |
| | | 32 | rail for sliding door |
| 22 | vertically moving sliding door on the outer side | 32' | central rail for sliding door pair |
| 22' | vertically moving sliding door on the inner side | 33 | drive for 22 |
| | | 34 | collector section, separation unit |
| 23 | collector column | | |
| 23' | left most collector row or section of uppermost collector row | 35 | upstream opening of 34 |
| | | 36 | downstream opening of 34 |
| | | 37 | interspace between rows |
| 23" | left collector row or section of uppermost collector row | 38 | lower horizontal edge of collector wall |
| 23‴ | right collector row or section row or of uppermost collector row | 39 | drive rope for 22 |
| | | 40 | top wall of 17 |
| | | 41 | attachment element for 39 |
| 23ʺʺ | rightmost collector row or section of uppermost collector row | 42 | eyelet in 41 for 39 |
| | | 43 | attachment hook |
| | | 44 | drive motor |
| 24 | sorbent cavity | 45 | housing of gear/control |
| 25 | sorbent cassette in separation unit | 46 | member for attachment of 41 to 22 |
| 25' | upper surface of sorbent cassette | 47 | convex outer wall of 22 |
| | | 48 | concave inner wall of 22 |
| 25" | lower surface of sorbent | 49 | horizontal stabilisation |
| | profiles | 82 | abutment surface on 81 |
| 50 | vertical stabilization | 83 | vertical contact line on 22 |
| 51 | flat outer wall of 40 | 84 | lateral sidewall of 22 |
| 52 | concave inner wall of 40 | 85 | lever axis of 64 |
| 53 | vertical stabilisation structures in 48 | 86 | axis of 65 |
| | | 87 | attachment member for 73 on 22 |
| 54 | bottom wall of 17 | | |
| 55 | flat outer wall of 54 | 88 | joint between 87 and 73 |
| 56 | concave inner wall of 54 | 89 | contact member on 22 in region 70 |
| 57 | vertical joining wall | | |
| 58 | openings in 50 | 90 | horizontal portion of 89 |
| 59 | attachment member for lever mechanism | 91 | inclined portion of 89 |
| | | 92 | contact surface of 89 |
| 60 | upper wheel | 93 | contact member on 17 in region 69 |
| 61 | lever axis of 63 | | |
| 62 | axis of 60 | 94 | contact surface of 93 |
| 63 | upper lever plate | 95 | inclined wall portion of 57 for 93 |
| 64 | lower lever plate | | |
| 65 | lower wheel | 96 | vertical portion of 52 |
| 66 | coupling bar | 97 | vertical portion of 70 |
| 67 | joint between 66 and 64 | 98 | elastic sealing element |
| 68 | joint between 66 and 63 | 99 | contact surface for 98 on 96 |
| 69 | horizontal contact line on 17 | 100 | contact surface on 96 for 98 |
| 70 | horizontal contact line on 22, edge profile | 101 | cavity above 25 in 24 |
| | | 102 | cavity below 25 and 24 |
| 71 | vertical stabilisation in 40/54 | 103 | steam inflow in 101 |
| 72 | gap | 104 | vertical steam flow through through 25 |
| 73 | actuation mechanism | | |
| 74 | joint on 63 for 73 | 105 | steam outflow in 102 |
| 75 | inner rolling surface of 32 | 106 | cavity between 48 and inlet opening of 25 |
| 76 | joining web of 32 | | |
| 77 | outer rolling surface of 32 | 107 | steam inflow in 106 |
| 78 | pneumatic cylinder of 73 | 108 | horizontal steam flow in 25 |
| 79 | pneumatic piston of 73 | 109 | steam outflow in 106 |
| 80 | stop protrusion on 22 | 110 | plane common to the curvature axes of the walls |
| 81 | stop protrusion on 32 or 16 | | |
| | 47 and 48 | 118 | outer face of 81 |
| 111 | inter-wall cavity between 47 and 48 | 119 | horizontal travelling direction of the sliding door into the inlet/outlet opening |
| 112 | plane of the sliding door | | |
| 113 | interspace between 40, 57 and 52 as well as interspace between 55, 56 and 57 | 120 | interspace between sorbent cassette and inner wall 48 |
| | | 121 | interspace between sorbent cassette and inner wall 48 |
| 114 | stabilisation web | | |
| 115 | interspace between 16' and 16" | 122 | vertical contact line on stationary structure |
| 116 | stabilisation web | 123 | horizontal flange portion of 48 |
| 117 | lateral wall of 22 | | |

## Claims

1. Separation unit (17) for separating at least one gaseous component from a gas mixture containing that component,
wherein the separation unit (17) comprises
at least one contiguous and sealing circumferential wall element (16, 52, 56), circumferentially enclosing at least one cavity (24),
said at least one contiguous and sealing circumferential wall element (16, 52, 56) defining an upstream opening (35) and an opposed downstream opening (36) of said at least one cavity (24),
said cavity (24) containing at least one gas adsorption structure (25) for adsorbing said at least one gaseous component, preferably under ambient pressure and/or temperature conditions,
wherein the separation unit (17) further comprises a pair of opposing sliding doors (22) for sealing the upstream opening (35) and the downstream opening (36), respectively, of said at least one cavity (24) in a closed state,
wherein each of the pair of opposing sliding doors (22), to open the closed cavity (24), is shifted in a direction essentially parallel to a plane (112) of the respective sliding door (22) to uncover the upstream (35) and downstream (36) opening, respectively and to allow for flow through of gas mixture through the gas adsorption structure (25),
wherein each of the pair of opposing sliding doors (22) comprises a pair of curved wall elements (47, 48), an outer wall (47) providing for a convex outer shape of the sliding door facing the outside, and an inner wall (48) providing for a concave inner shape of the sliding door facing said cavity (24),
wherein the axes of curvature of said curved wall elements (47, 48) of one or both sliding doors (22) are aligned parallel and in the same plane, or are coaxial,
and wherein connecting portions (70) joining said wall elements at the edges are contacting and sealing against said circumferential wall element (16, 52, 56).

2. Separation unit (17) according to claim 1, wherein the separation unit (17) comprises at least one set of four contiguous and sealing circumferential wall elements (16, 52, 56), a lower wall element (56), an opposed upper wall element (52) and two opposed lateral circumferential wall elements (16) joining corresponding ends of the upper and lower wall element, and circumferentially enclosing said at least one cavity (24), said set of four contiguous and sealing circumferential wall elements defining the upstream opening (35) and the opposed downstream opening (36), and wherein the lower wall element (56) and the upper wall element (52) are provided as convex inner walls providing for a concave inner shape facing said cavity, wherein the axes of curvature of said upper wall element (52) and lower wall element (56) are parallel to the axes of curvature of the walls (47, 48) of one or both sliding doors (22),
wherein preferably the upper and lower wall elements are arranged mirror symmetric to each other, the lateral wall elements are arranged parallel to each other, and also the pair of opposing sliding doors (22) is arranged mirror symmetric to each other.

3. Separation unit (17) according to any of the preceding claims, wherein the curvature radius of the inner wall (48) is the same or larger than the curvature radius of the outer wall (47).

4. Separation unit (17) according to any of the preceding claims, wherein the inner wall (48), the outer wall (47), or both, are provided as sheet elements, preferably from a metal or plastic (fibre reinforced) material, and wherein between the inner wall (48) and the outer wall (47) there is at least one void inter-wall cavity (111), wherein preferably in said inter-wall cavity (111) there is provided one or several stabilisation elements (50) joining the inner wall (48) and the outer wall (47), and wherein further preferably the said stabilisation elements (50) are provided as wall elements, with or without openings (58), oriented in a direction perpendicular to the axes of curvature of said curved wall elements (47, 48).

5. Separation unit (17) according to any of the preceding claims, wherein, to open the closed cavity (24), each of the pair of opposing sliding doors (22) is first moved in a direction essentially parallel to the normal of the plane of the upstream (35) and downstream (36) opening, respectively, and is then shifted in a direction essentially parallel to the plane (112) of the respective sliding door (22).

6. Separation unit (17) according to claim 5, wherein for the movement in a direction essentially parallel to the normal of the plane of the upstream (35) and downstream (36) opening, there is provided a movement mechanism which is mounted on the respective sliding door (22), wherein preferably said movement mechanism includes at least one lever mechanism actuated on the respective sliding door (22).

7. Separation unit (17) according to any of the preceding claims, wherein one or both sliding doors (22) are mounted on a pair of vertical rails (32), preferably C or H rails, wherein preferably the doors are travelling in or on these rails (32) with rollers (60, 65), and wherein lever means (63,64) are provided which allow to press the respective door (22) to a corresponding contact surface (69) of the respective opening (35, 36) at the position for closing, and to distance the door again from that sealing position to allow for sliding the door to free the respective opening.

8. Separation unit (17) according to any of the preceding claims, wherein the sliding doors (22) are shifted in a direction essentially parallel to the plane of the respective sliding door (22) to uncover and/or cover the upstream (35) and downstream (36) opening in a vertical direction by way of a cable (39) attached to the respective sliding door (22), preferably by way of a drive (33), preferably a winch traction, which is located above an uppermost separation unit (17') of a column of separation units (17) to be opened/closed by said pair of sliding doors (22).

9. Separation unit (17) according to any of the preceding claims, wherein the sliding door (22) and/or the respective opening (35, 36) of at least one cavity (24) is provided with at least one circumferential sealing element (98), preferably in the form of at least one sealing ring and/or in the form of a sealing coating,
and wherein in a direction away from said cavity (24) and adjacent or close to said sealing element (98) at least in a horizontal portion thereof, there is provided a contact member (93) preferably along a horizontal contact line (69) of the contiguous wall of the separation unit, and a door contact member (89) along a preferably horizontal contact line (70), a contact surface (94) of the contact member (93) and a door contact surface (92) of the door contact member (89) contacting each other in the closed state, and wherein the door contact surface (92) is inclined relative to the plane (112) of the respective sliding door (22), wherein preferably the door contact surfaces (92) of the opposing horizontal contact lines (70) of each sliding door (22) are converging in a direction into the cavity (24), preferably each with an inclination angle relative to the normal of the plane (112) of the sliding door in the range of 30-80°, preferably in the range of 40-70°, wherein preferably the inclination angle at opposing horizontal contact lines is the same with opposing sign.

10. Separation unit (17) according to any of the preceding claims, wherein the inner wall (48), the outer wall (47), or both, are provided as sheet elements, preferably from a metal or plastic (fibre reinforced) material, and wherein between the inner wall (48) and the outer wall (47) there is at least one void inter-wall cavity (111), and wherein stabilising protrusions (53) or profiles (49), or both, protruding into the inter-wall cavity (111) are provided on the inner wall (48), the outer wall (47), or both, wherein preferably both stabilising protrusions (53) oriented in a vertical direction, and stabilising profiles (49), oriented in a horizontal direction, are provided on the inner wall (48).

11. Separation unit (17) according to any of the preceding claims, wherein in the cavity (24) there is provided at least one stabilisation structure (31) extending in a vertical or in a horizontal direction between opposing walls of the circumferential wall elements (16, 52, 56).

12. Separation unit (17) according to any of the preceding claims, containing an array of at least two, preferably at least three, or at least four or in the range of 2-8 or 2-6 cavities 24 with circumferential wall elements enclosing the cavities (24) and each housing respective gas adsorption structures (25), wherein said pair of opposing sliding doors (22) is mounted to allow for alternatingly sealing one cavity of the separation unit (17) as well as the other cavity(ies),
wherein preferably the cavities of the array are arranged adjacent to each other in one vertical column, wherein preferably the cavities of the array are arranged directly adjacent to each other.

13. Separation unit (17) according to claim 12, wherein it is attached to or encompasses only one common evacuation unit, and/or only one common heating unit, and/or only one common collection unit for the gaseous component, and/or only one common drive at the upstream side and the downstream side for the doors, and/or only one set of louvres at the upstream side, in each case common for all cavities (24), while preferably for the cavities an common controllable gas or air propelling device (9) is provided at the downstream side, preferably forming an upper horizontal wall of separation station cavity (21) enclosed by at least four arrays of cavities.

14. Method of operating a separation unit (1) or an arrangement of separation units according to any of the preceding claims and containing an array of cavities, wherein the pair of sliding doors (22) is positioned to seal one cavity of the array while the other cavities are open to flow through to the gas mixture, the sealed cavity is exposed to conditions so as to desorb and extract the gaseous component while the other cavities are driven by gas or air propelling devices to adsorb the at least one gaseous component from the gas mixture, and once the desorption in the sealed cavity is terminated, the pair of sliding doors (22) is shifted to a next cavity, preferably the one in the array which has been exposed to gas mixture adsorption for the longest time span, to seal that next cavity, and then this next cavity is exposed to conditions so as to desorb and extract the gaseous component while the other cavities are driven by gas or air propelling devices to adsorb the at least one gaseous component from the gas mixture, wherein preferably that sequence of steps is continued analogously to seal and extract sequentially all the cavities in the array and to cyclically iterate that sequence of adsorption and desorption steps equal to the number of cavities in the array at least once, preferably at least 100 times, or at least 1'000 times.

15. Use of a separation unit, an arrangement or an array according to any of the preceding claims, or of a method according to claim 14, for the separation of carbon dioxide and/or water vapor from ambient air.
